# EUROPEAN PATENT APPLICATION

(11) **EP 4 518 302 A1**
(43) Date of publication of application: **05.03.2025**
(21) Application number: 23796828.4
(22) Date of filing: 27.04.2023
(51) Int. Cl.: H04N 1/00, G03H 1/04, G06F 40/58

(54) **MULTIFUNCTIONAL DOCUMENT-PROCESSING DEVICE COMPRISING DOCUMENT SCAN FUNCTION, DOCUMENT TRANSLATION FUNCTION AND DOCUMENT OUTPUT FUNCTION**

(30) Priority: 29.04.2022 KR 20220053578
(71) Applicant: Ahn, Sang Myung, Goyang-si, Gyeonggi-do 10401 (KR)
(72) Inventor: Ahn, Sang Myung, Goyang-si, Gyeonggi-do 10401 (KR)
(74) Representative: Rau, Schneck & Hübner Patentanwälte Rechtsanwälte PartGmbB
(86) International application number: PCT/KR2023/005760
(87) International publication number: WO 2023/211186

(57) **Abstract**

A multifunctional document-processing device comprising a document scan function, a document translation function and a document output function is disclosed. With respect to subject matter, the present invention comprises: a body unit having, embedded therein, a document scanning unit that has a seating surface with a top side on which a document to be scanned can be seated, and having a screen output unit foldably mounted on the top side thereof by means of a hinge structure; the screen output unit, which is mounted by means of the hinge structure, has a structure to which a morphic light field 3D technology capable of outputting a three-dimensional image or video is applied by means of a control signal transmitted from a screen output control unit, and senses a screen touch of a user so as to transmit a touch coordinate value to the screen output control unit; a first motion sensing unit, which protrudes a predetermined height from the surface of the screen output unit so as to recognize if fingers approach a predetermined distance from the surface of the screen output unit, and thus detects a corresponding input coordinate value; a RealSense camera unit which is mounted on top of the edge of the screen output unit, and which detects position and direction information of the fingers and pupils of the user so as to transmit same to the screen output control unit; the screen output control unit for controlling the operation of the screen output unit; and a translation processing unit, which recognizes text information on the basis of acquired document information so as to translate the text information into a language selected by the user, and then transmits processed information to the screen output control unit.

## Description

### Technical Field

The present invention relates to a multifunctional document-processing device, and more particularly, to a multifunctional document-processing device including a document scan function, a document translation function, and a document output function.

### Background Art

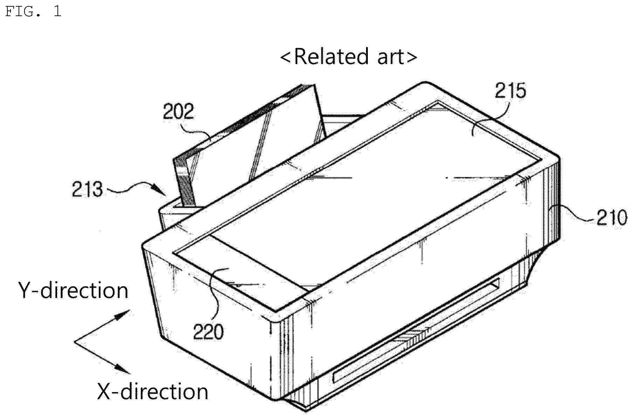

Recently, with the development of office automation technologies, the demand for office equipment is increasing, and various devices with multiple functions, such as devices referred to as multi-function copiers having a structure as shown in FIG. 1, are being introduced.

The multi-function copier shown in FIG. 1 is a device having all functions of a facsimile, a copier, a printer, and a scanner, and includes a scanner, a print engine, and a host PC interface to perform various functions.

In general, a scanner is an optical character reader that acquires characters recorded on a surface or the like as image information, converts the acquired image information into data corresponding to characters by using a scheme such as optical character recognition (OCR), and outputs the corresponding character information on a display device.

Recently, the scanner may perform a function of receiving color films, color photographs, drawings, or the like in high resolution to perform color separation, so that the scanner has become an essential tool for image processing and electronic publishing.

Meanwhile, with the rapid development of technologies, several technologies for translating one language into another language requested by a user have been introduced. Usually, these technologies are executed through a PC or the like in which a translation program is stored, or executed through a terminal (e.g., a smart phone, etc.) in which a translation application is stored.

However, considering an actual work environment in an office, most important contents are recorded and stored in documents, and in most cases, contracts are established and realized by exchanging documents, so that it is necessary to develop a device capable of performing translation and a simple document work through a scan work of a document as well as outputting resulting contents.

Therefore, a technology capable of solving problems of the related art described above is required.

### Disclosure

### Technical Problem

An object of the present invention is to provide a multifunctional document-processing device including a configuration capable of easily scanning a document, translating a document content acquired through the scanning in real time and provide the translated document content to a user, and outputting a specific portion of the document desired by the user.

### Technical Solution

To achieve the object described above, according to one aspect of the present invention, there is provided a multifunctional document-processing device including: a body unit including a document scanning unit embedded in the body unit and having a seating surface with a top surface on which a document to be scanned is seated, a document discharge port formed on one side surface of the body unit to perform discharge from a printed matter output unit mounted inside the body unit, and a screen output unit mounted on one top side of the body unit by a hinge structure so as to be foldable on a top surface of the body unit; the screen output unit mounted on the one top side of the body unit by the hinge structure, having a structure to which a morphic light field 3D technology capable of outputting a three-dimensional image or video by a control signal transmitted from a screen output control unit is applied, having an electrostatic touch screen structure, and configured to sense a screen touch of a user so as to transmit a touch coordinate value to the screen output control unit; a first motion sensing unit mounted in a structure that continuously surrounds an edge of the screen output unit, and protruding a predetermined height from a surface of the screen output unit to recognize when a finger approaches a predetermined distance from the surface of the screen output unit so as to detect a corresponding input coordinate value; a RealSense camera unit mounted on an upper portion of the edge of the screen output unit, and configured to detect position and direction information of the finger and a pupil of the user so as to transmit the detected position and direction information to the screen output control unit; the screen output control unit mounted inside the body unit, and configured to control an operation of the screen output unit based on data acquired from the screen output unit, the first motion sensing unit, and a translation processing unit; and the translation processing unit mounted inside the body unit, and configured to recognize character information based on document information acquired through the document scanning unit so as to translate the character information into a language selected by the user and transmit processed information to the screen output control unit.

According to one embodiment of the present invention, the body unit may further include: a manual input unit mounted on the top surface of the body unit while being adjacent to the seating surface, and configured to receive command information by a finger touch or a pressing motion of the user; and a wireless communication module formed on the side surface, and configured to wirelessly interwork with a smart device of the user so as to receive document information provided from the smart device of the user.

According to one embodiment of the present invention, the screen output control unit may be configured to: output the three-dimensional image or video such that a plurality of work windows obtained by dividing a screen are arranged on the screen output unit by a finger touch of the user; output the character information acquired from the document scanning unit, the translated character information, or a dictionary corresponding to the language selected by the user on the three-dimensional image or video; and output a keyboard image for receiving a control value desired by the user from the user on the three-dimensional image.

According to one embodiment of the present invention, the RealSense camera unit may include: a second motion sensing unit mounted on the upper portion of the edge of the screen output unit, and configured to capture positions of an arm and a hand of the user in real time so as to detect position information of the arm and the hand; and a third motion sensing unit mounted on the upper portion of the edge of the screen output unit, and configured to capture the pupil of the user in real time so as to detect the direction information of the pupil.

According to one embodiment of the present invention, the multifunctional document-processing device may further include: a coordinate correction unit mounted inside the body unit, and configured to calculate a second coordinate result value by correcting a first coordinate result value based on data acquired through the second motion sensing unit and the third motion sensing unit and transmit the calculated second coordinate result value to the screen output control unit.

In this case, the screen output control unit may be configured to calculate the first coordinate result value based on a touch sensing coordinate value acquired from the screen output unit and the input coordinate value acquired from the first motion sensing unit, control the screen output unit to output a three-dimensional image or video corresponding to the first coordinate result value based on the first coordinate result value, and control the operation of the screen output unit based on data acquired from the coordinate correction unit.

According to one embodiment of the present invention, the multifunctional document-processing device may further include: a hologram output unit mounted on a top surface and a side surface of the edge of the screen output unit, and configured to output command information selected by the user, operation state information of the document scanning unit, and operation state information of the printed matter output unit as a hologram stereoscopic image at a predetermined distance from the edge of the screen output unit.

In this case, the hologram output unit may include: an upper output unit mounted on the top surface of the edge of the screen output unit, and configured to output a hologram stereoscopic image on a front side of a face of the user, in which the hologram stereoscopic image includes an emoticon and a character corresponding to the command information selected by the user; a left output unit mounted on a left side surface of the edge of the screen output unit, and configured to output a hologram stereoscopic image on a left front side of the user, in which the hologram stereoscopic image includes an emoticon and a character corresponding to the operation state information of the document scanning unit; and a right output unit mounted on a right side surface of the edge of the screen output unit, and configured to output a hologram stereoscopic image on a right front side of the user, in which the hologram stereoscopic image includes an emoticon and a character corresponding to the operation state information of the printed matter output unit.

In addition, the hologram output unit may include: a lighting unit mounted inside the edge of the screen output unit, and including a plurality of light source units that are sequentially turned on/off; a hologram optical unit configured to reproduce a light that forms a plurality of screen images spaced apart from each other in a depth direction in a space when a light is incident from the lighting unit; a display panel configured to modulate the light reproduced by the hologram optical unit according to an image signal, in which an image of one frame is divided into a plurality of images such that a number of the images is equal to a number of light source units, and sequentially modulate a plurality of sub-frame images to be formed at positions spaced apart from each other in the depth direction; and a light path change unit disposed in a light path between the lighting unit and the hologram optical unit, configured to change the path such that lights emitted from the light source units are incident on the hologram optical unit at different incident angles, and including a Fresnel lens.

### Advantageous Effects

As described above, according to the multifunctional document-processing device of the present invention, the multifunctional document-processing device may include a document scanning unit, a printed matter output unit, a body unit, a screen output unit, a first motion sensing unit, a RealSense camera unit, a screen output control unit, and a translation processing unit having specific structures, so that a multifunctional document-processing device including a configuration capable of easily scanning a document, translating a document content acquired through the scanning in real time and provide the translated document content to a user, and outputting a specific portion of the document desired by the user can be provided.

In addition, according to the multifunctional document-processing device of the present invention, the multifunctional document-processing device may include a first motion sensing unit, a second motion sensing unit, a third motion sensing unit, and a RealSense camera unit having specific structures, so that errors in data acquired through the first motion sensing unit can be removed in real time, and as a result, a multifunctional document-processing device capable of accurately detecting a control command value intended to be selected by a user and easily managing operations of a document scanning unit, a printed matter output unit, and a translation processing unit by the control command value can be provided.

In addition, according to the multifunctional document-processing device of the present invention, the multifunctional document-processing device may include a hologram output unit having a specific structure, so that a hologram stereoscopic image including an emoticon and a character can be independently output on front, left, and right sides based on a face of the user so as to allow command information selected by a user, operation state information of the document scanning unit, and operation state information of the printed matter output unit to be intuitively recognized, and as a result, a multifunctional document-processing device capable of maximizing convenience of use can be provided.

### Description of Drawings

FIG. 1 is a perspective view showing a multi-function copier according to the related art.
FIG. 2 is a perspective view showing a multifunctional document-processing device according to one embodiment of the present invention.
FIG. 3 is a schematic diagram showing a longitudinal section of side structures of a screen output unit and a first motion sensing unit of the multifunctional document-processing device shown in FIG. 2.
FIG. 4 is a block diagram showing a multifunctional document-processing device according to one embodiment of the present invention.
FIG. 5 is a block diagram showing a multifunctional document-processing device according to another embodiment of the present invention.
FIG. 6 is a perspective view showing a multifunctional document-processing device according to still another embodiment of the present invention.
FIG. 7 is a view showing a longitudinal section of a hologram output unit of a multifunctional document-processing device according to yet another embodiment of the present invention.
FIGS. 8 to 11 are conceptual diagrams for describing a principle of forming a plurality of screen images by a hologram optical unit employed in the hologram output unit shown in FIG. 7.
FIG. 12 is a view showing a longitudinal section of a hologram output unit of a multifunctional document-processing device according to still yet another embodiment of the present invention.

### Best Mode

Hereinafter, an exemplary embodiment of the present invention will be described in detail with reference to the drawings. Prior to this, terms or words used in the present disclosure and claims should not be interpreted as being limited to their general or dictionary meanings, but should be interpreted as having meanings and concepts that conform to the technical idea of the present invention.

Throughout the present disclosure, when it is mentioned that one member is located "on" another member, this includes not only cases where one member makes contact with the other member, but also cases where another member exists between the two members. Throughout the present disclosure, when it is mentioned that one part "includes" one element, this means that other elements may be further included but not excluded unless specifically stated to the contrary.

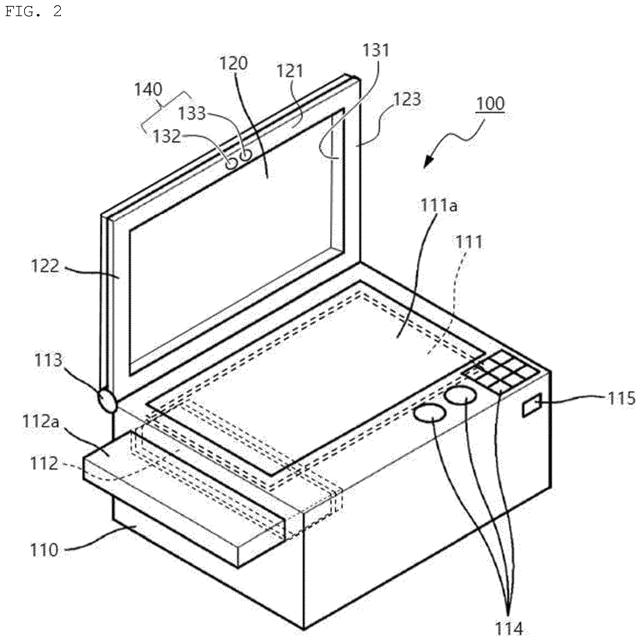

FIG. 2 is a perspective view showing a multifunctional document-processing device according to one embodiment of the present invention.

Referring to FIG. 2, according to the present embodiment, a multifunctional document-processing device 100 may include a document scanning unit 111, a printed matter output unit 112, a body unit 110, a screen output unit 120, a first motion sensing unit 131, a RealSense camera unit 140, a screen output control unit 150, and a translation processing unit 152 having specific structures, so that a multifunctional document-processing device including a configuration capable of easily scanning a document, translating a document content acquired through the scanning in real time and provide the translated document content to a user, and outputting a specific portion of the document desired by the user may be provided.

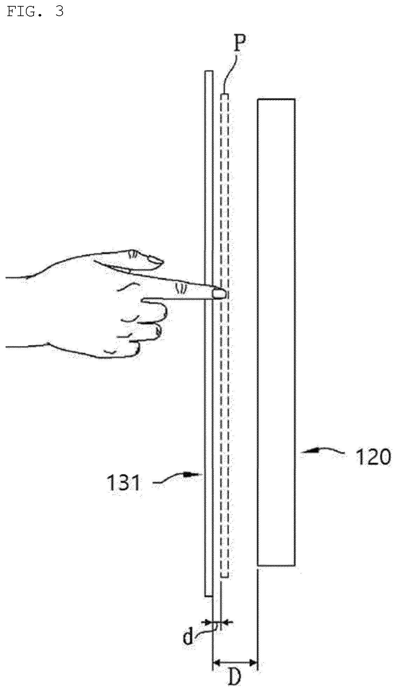

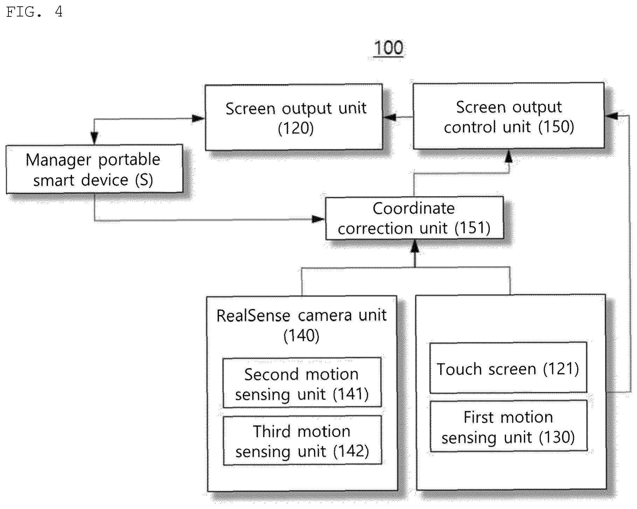

FIG. 3 is a schematic diagram showing a longitudinal section of side structures of a screen output unit and a first motion sensing unit of the multifunctional document-processing device shown in FIG. 2, and FIG. 4 is a block diagram showing a multifunctional document-processing device according to one embodiment of the present invention.

Referring to FIGS. 2 to 4, according to the present embodiment, the body unit 110 of the multifunctional document-processing device 100 may have a structure that includes a document scanning unit 111 embedded in the body unit 110 and having a seating surface 111a with a top surface on which a document to be scanned may be seated. In addition, the body unit 110 may have a structure that includes a document discharge port 112a formed on one side surface of the body unit 110 to perform discharge from a printed matter output unit 112 mounted inside the body unit 110, and a screen output unit 120 mounted on one top side of the body unit 110 by a hinge structure 113 so as to be foldable on a top surface of the body unit 110.

In some cases, a manual input unit 114 may be further mounted on the top surface of the body unit 110 while being adjacent to the seating surface. In this case, manual input unit 114 may preferably have a structure that receives command information by a finger touch or a pressing motion of a user.

In addition, a wireless communication module 115 capable of wirelessly interworking with a smart device of the user may be further mounted on the side surface of the body unit 110. The wireless communication module 115 may wirelessly interwork with the smart device of the user so as to receive document information provided from the smart device of the user, and a document editing work desired by the user may be performed based on received data. More preferably, an application capable of controlling an operation of the multifunctional document-processing device 100 may be installed on the smart device of the user to remotely control the operation of the multifunctional document-processing device 100.

Meanwhile, according to the present embodiment, the screen output unit 120 may have a configuration mounted on the one top side of the body unit 110 by the hinge structure 113. In this case, the screen output unit 120 may have a structure to which a morphic light field 3D technology capable of outputting a three-dimensional image or video by a control signal transmitted from the screen output control unit 150 is applied, have an electrostatic touch screen structure, and have a structure that senses a screen touch of the user so as to transmit a touch coordinate value to the screen output control unit 150.

According to the present embodiment, the screen output control unit 150 may have a configuration mounted inside the body unit 110, and may control an operation of the screen output unit 120 based on data acquired from the screen output unit 120, the first motion sensing unit 131, and the translation processing unit 152.

In detail, the screen output control unit 150 may output a three-dimensional image or video such that a plurality of work windows obtained by dividing a screen are arranged on the screen output unit 120 by a finger touch of the user. The screen output control unit 150 may output the character information acquired from the document scanning unit 111, the translated character information, or a dictionary corresponding to a language selected by the user on the three-dimensional image or video mentioned above. In addition, the screen output control unit 150 may output a keyboard image for receiving a control value desired by the user from the user on the three-dimensional image.

According to the present embodiment, the translation processing unit 152 may have a configuration mounted inside the body unit 110, and may recognize character information based on document information acquired through the document scanning unit 111 so as to translate the character information into the language selected by the user and transmit processed information to the screen output control unit 150.

Meanwhile, as shown in FIGS. 2 and 3, according to the present embodiment, the first motion sensing unit 131 mentioned above may have a configuration mounted in a structure that continuously surrounds an edge 121 of the screen output unit 120, and protruding a predetermined height from a surface of the screen output unit 120 to recognize when a finger approaches a predetermined distance from the surface of the screen output unit 120 so as to detect the corresponding input coordinate value.

In detail, as shown in FIG. 3, the first motion sensing unit 131 may have a structure having a width that is equal to a length by which the first motion sensing unit 131 is spaced apart from the surface of the screen output unit 120 by a predetermined distance D. In this case, the finger approaching the surface of the screen output unit 120 may be recognized to detect coordinates of the finger. In addition, as shown in FIG. 3, the three-dimensional image or video formed by the screen output unit 120 may be spaced apart from the surface of the screen output unit 120 by a predetermined height (D-d), so that the user may be guided to touch a position spaced apart from the surface of the screen output unit 120 by the predetermined height.

According to the present embodiment, the RealSense camera unit 140 may have a configuration mounted on an upper portion of the edge of the screen output unit 120, and may have a structure that detects position and direction information of the finger and a pupil of the user so as to transmit the detected position and direction information to the screen output control unit 150.

In detail, as shown in FIG. 2, the RealSense camera unit 140 may include a second motion sensing unit 132 and a third motion sensing unit 133, which perform specific roles. The second motion sensing unit 132 of the RealSense camera unit 140 may have a configuration mounted on the upper portion of the edge of the screen output unit 120, and may capture positions of an arm and a hand of the user in real time so as to detect position information of the arm and the hand. In addition, the third motion sensing unit 133 of the RealSense camera unit 140 may have a configuration mounted on the upper portion of the edge of the screen output unit 120, and may capture the pupil of the user in real time so as to detect the direction information of the pupil.

According to the present embodiment, a coordinate correction unit 151 may have a configuration mounted inside the body unit 110, and may calculate a second coordinate result value by correcting a first coordinate result value based on data acquired through the second motion sensing unit 132 and the third motion sensing unit 133, and transmit the calculated second coordinate result value to the screen output control unit 150.

In this case, according to the present embodiment, the screen output control unit 150 may calculate the first coordinate result value based on a touch sensing coordinate value acquired from the screen output unit 120 and the input coordinate value acquired from the first motion sensing unit 131, control the screen output unit 120 to output a three-dimensional image or video corresponding to the first coordinate result value based on the first coordinate result value, and control the operation of the screen output unit 120 based on data acquired from the coordinate correction unit 151.

In some cases, a wireless communication module (not shown) may be embedded in the screen output unit 120 and the coordinate correction unit 151, so that the wireless communication module may be controlled by wirelessly interworking with a portable smart device S of a manager. In detail, a content output on the screen output unit 120 may be mirrored and output on the portable smart device S of the manager, and a correction setting value of the coordinate correction unit 151 may be changed to change the content output from the screen output unit 120 according to an intention of the manager. In addition, data stored on the portable smart device S of the manager may be used and output on the screen output unit 120.

In this case, according to the present embodiment, the multifunctional document-processing device may include a first motion sensing unit 131, a second motion sensing unit 132, a third motion sensing unit 133, and a RealSense camera unit 140 having specific structures, so that errors in data acquired through the first motion sensing unit 131 may be removed in real time, and as a result, a multifunctional document-processing device capable of accurately detecting a control command value intended to be selected by a user and easily managing operations of a document scanning unit 111, a printed matter output unit 112, and a translation processing unit 152 by the control command value may be provided.

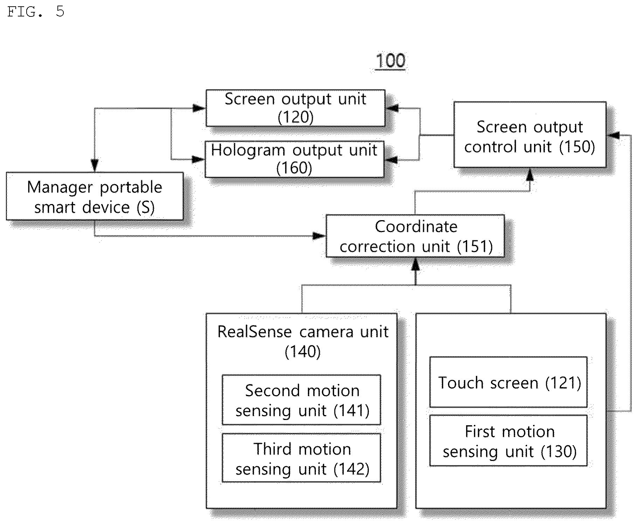

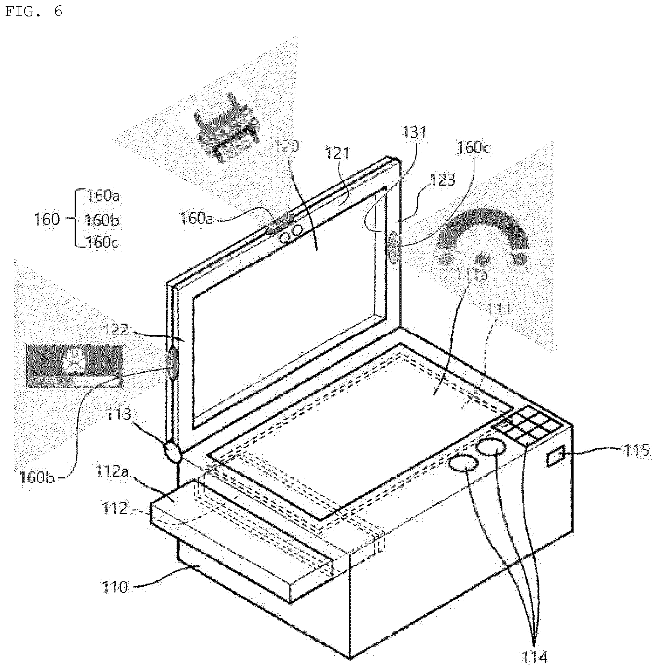

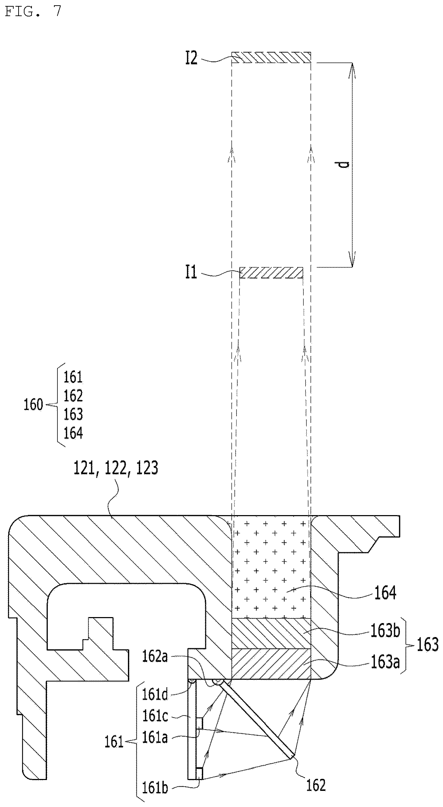

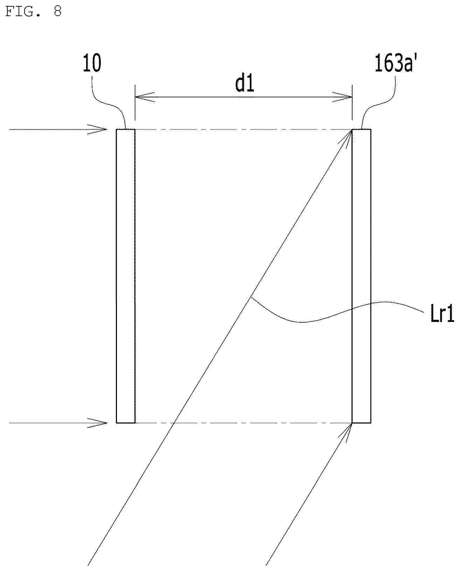

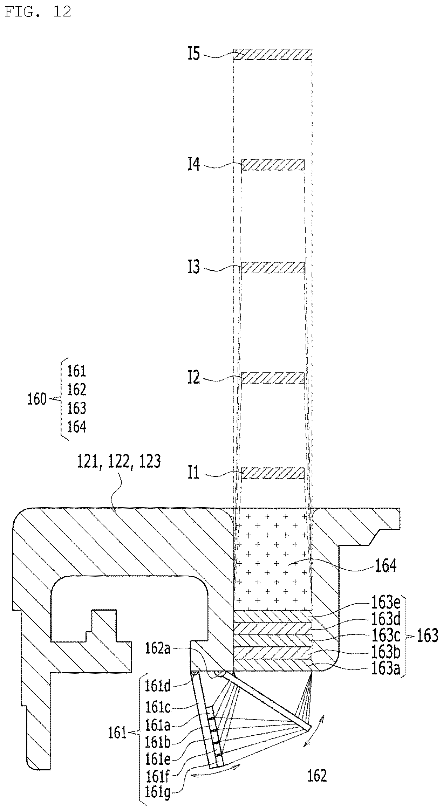

FIG. 5 is a block diagram showing a multifunctional document-processing device according to another embodiment of the present invention, and FIG. 6 is a perspective view showing a multifunctional document-processing device according to still another embodiment of the present invention. In addition, FIG. 7 is a view showing a longitudinal section of a hologram output unit of a multifunctional document-processing device according to yet another embodiment of the present invention, and FIGS. 8 to 11 are conceptual diagrams for describing a principle of forming a plurality of screen images by a hologram optical unit employed in the hologram output unit shown in FIG. 7. In addition, FIG. 12 is a view showing a longitudinal section of a hologram output unit of a multifunctional document-processing device according to still yet another embodiment of the present invention.

Referring to these drawings, according to the present embodiment, the multifunctional document-processing device 100 may further include a hologram output unit 160 capable of outputting a hologram image on upper and side spaces of the edge of the screen output unit 120.

According to the present embodiment, the hologram output unit 160 may have a configuration mounted on a top surface and a side surface of the edge of the screen output unit 120, and may output command information selected by the user, operation state information of the document scanning unit 111, and operation state information of the printed matter output unit 112 as a hologram stereoscopic image at a predetermined distance from the edge of the screen output unit 120.

In detail, as shown in FIG. 6, according to the present embodiment, the hologram output unit 160 may include an upper output unit 160a, a left output unit 160b, and a right output unit 160c, which perform specific roles. The upper output unit 160a may have a configuration mounted on the top surface of the edge 121 of the screen output unit 120, and configured to output a hologram stereoscopic image on a front side of a face of the user, in which the hologram stereoscopic image may include an emoticon and a character corresponding to the command information selected by the user. The left output unit 160b may have a configuration mounted on a left side surface of the edge of the screen output unit 120, and configured to output a hologram stereoscopic image on a left front side of the user, in which the hologram stereoscopic image may include an emoticon and a character corresponding to the operation state information of the document scanning unit 111. In addition, a right output unit 160c may have a configuration mounted on a right side surface of the edge of the screen output unit 120, and configured to output a hologram stereoscopic image on a right front side of the user, in which the hologram stereoscopic image may include an emoticon and a character corresponding to the operation state information of the printed matter output unit 112.

According to the present embodiment, the hologram output unit 160 may include a lighting unit 161, a hologram optical unit 163, a display panel 164, and a light path change unit 162 having specific structures.

The lighting unit 161 of the hologram output unit 160 may have a structure including a plurality of light source units that are sequentially turned on/off. In this case, the hologram optical unit 163 may have a structure configured to reproduce a light that forms a plurality of screen images spaced apart from each other in a depth direction in a space when a light is incident from the lighting unit 161.

According to the present embodiment, the display panel 164 of the hologram output unit 160 may modulate the light reproduced by the hologram optical unit 163 according to an image signal, in which an image of one frame is divided into a plurality of images such that a number of the images is equal to a number of light source units, and may sequentially modulate a plurality of sub-frame images to be formed at positions spaced apart from each other in the depth direction.

In this case, the light path change unit 162 disposed in a light path between the lighting unit 161 and the hologram optical unit 163 may have a structure that changes the path such that lights emitted from the light source units are incident on the hologram optical unit 163 at different incident angles, and includes a Fresnel lens.

In detail, according to the present embodiment, the hologram output unit 160 may implement a two-dimensional screen image or a three-dimensional screen image while lighting up with a specific color, so that the implemented screen image may be used to effectively perform menu image and notification functions for the user of the multifunctional document-processing device.

In detail, according to the present embodiment, the hologram output unit 160 may sequentially reproduce lights from hologram elements to form a plurality of screen images in a space spaced apart from the top surface of the body unit 110 by a predetermined height, divide the image of one frame into a plurality of sub-frame images, and modulate the sequentially reproduced lights according to the image signal corresponding to each of the sub-frame images, thereby displaying a three-dimensional image that may be recognized by naked eyes of an elevator passenger or a person waiting for an elevator.

According to the present embodiment, the hologram optical unit 163 may include a lighting unit 161, a hologram optical unit 163, and a display panel 164, and may further include a light path change unit 162 provided between the lighting unit 161 and the hologram optical unit 163. In addition, a control unit C configured to control operations of the lighting unit 161 and the display panel 164 may be provided.

The lighting unit 161 may include a plurality of light source units, for example, a first light source unit 161a and a second light source unit 161b.

The number of light source units constituting the lighting unit 161 may be equal to the number of the screen images formed by the hologram optical unit 163. As light sources of the first and second light source units 161a and 161b, a light emitting diode or a laser diode may be employed, or a general projector lamp may be employed. The first light source unit 161a and the second light source unit 161b may be turned on/off by the control unit C, and may be alternately turned on/off in synchronization with time-division driving of the display panel 164 as will be described below.

The hologram optical unit 163 may be provided to form a plurality of screen images spaced apart from each other in a space. To this end, the hologram optical unit 163 may include a plurality of hologram elements having a plurality of screen images recorded thereon, respectively, so that the lights forming the screen images may be reproduced, and may include, for example, a first hologram element 163a and a second hologram element 163b.

In this case, the principle of forming a plurality of screen images spaced apart from each other in a space by the first hologram element 163a and the second hologram element 163b will be described as follows.

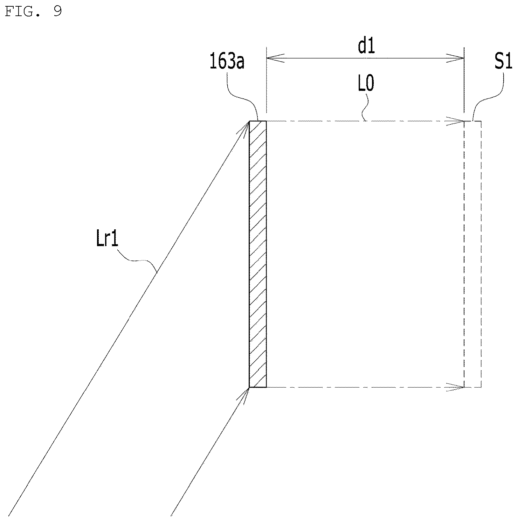

FIGS. 8 and 9 show manufacture of the first hologram element 163a by recording a hologram corresponding to the screen image on a hologram medium 163a' and a process of reproducing the screen image from the first hologram element 163a. The hologram corresponding to the screen image may be formed, for example, by recording an image of a diffuser 10 on the hologram medium 163a'. The hologram medium 163a' may be a photosensitive medium that is sensitive to a light, may be formed of a material such as a photoresist or a photopolymer, and may store image information by an optical interference pattern of an object light including image data and a reference light that does not include any data. In other words, when the diffuser 10 is irradiated with the light, an object light Lo including the image data of the diffuser 10 may come out from the diffuser 10, and an interference pattern formed by an interference of the object light Lo and the reference light Lr1 that does not include any image data may be recorded on the hologram medium 163a'. In this case, a laser beam with excellent coherence may be used as a light forming the reference light Lr1. FIG. 9 shows that the first hologram element 163a may record an image hologram of the diffuser 10 located at a distance d1 from the hologram medium 163a'. When the first hologram element 163a is irradiated with the same reference light Lr1 used upon the recording, the reference light Lr1 may be diffracted by a hologram formed on the first hologram element 163a, so that the object light Lo may be restored. The restored object light Lo may represent a diffuser image, which is equivalent to a screen S1 being formed in a space at a distance d1 from the first hologram element 163a.

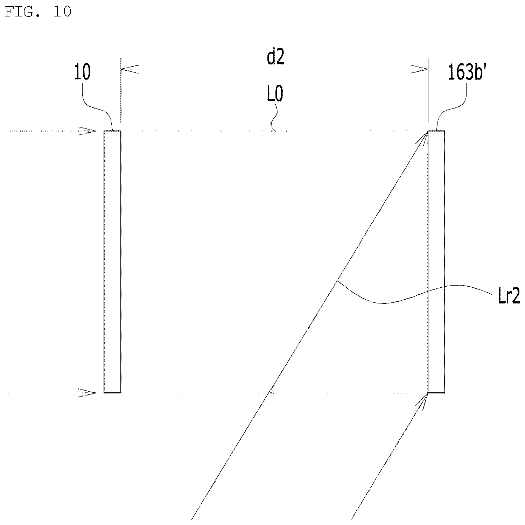

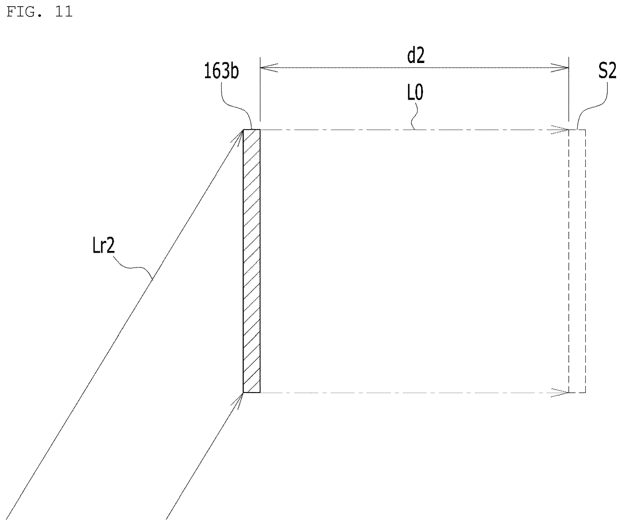

FIGS. 10 and 11 show manufacture of the second hologram element 163b by recording a hologram corresponding to the screen image on a hologram medium 163b' and a process of reproducing the screen image from the second hologram element 163b. This time, the diffuser 10 may be separated from the hologram medium 163b' by a distance d2, and the hologram medium 163b' may be irradiated with the object light Lo including the image of the diffuser 10 and a reference light Lr2 that does not include image data. In this case, an angle at which the reference light Lr2 is incident on the hologram medium 163b' may be different from an angle at which the reference light Lr1 is incident in FIGS. 8 and 9. An interference pattern formed by an interference of the object light Lo and the reference light Lr2 may be recorded on the hologram medium 163b'. FIG. 11 shows that the second hologram element 163b may record an image hologram of the diffuser located at a distance d2 from the hologram medium 163b'. When the second hologram element 163b is irradiated with the reference light Lr2 used upon the recording, the object light Lo may be restored so that a screen S2 may be formed at a distance d2 from the second hologram element 163b.

According to the present embodiment, the hologram output unit 160 may employ the first and second hologram elements 163a and 163b manufactured according to such a principle, and in principle, a characteristic that a hologram is reproduced only at an angle of the reference light used for the recording may be used. In other words, the hologram may exhibit maximum efficiency when reproduced at the same angle as the reference light upon the recording, such an angle may be referred as a Bragg angle, and diffraction efficiency may drop sharply as an angle deviates from the Bragg angle. When angles of lamp lights are adjusted to match the Bragg angles when reproducing the hologram recorded in each of the first and second hologram elements 163a and 163b, images recorded in the first and second hologram elements 163a and 163b may be reproduced without an interference between each other even when the first and second hologram elements 163a and 163b overlap each other.

The first and second light source units 161a and 161b may be configured such that lights may be sequentially emitted to allow the lights to be incident on the first and second hologram elements 163a and 163b at angles corresponding to the reference lights of the first and second hologram elements 163a and 163b, respectively. Accordingly, the lights formed at different positions from the first and second hologram elements 163a and 163b may be sequentially reproduced.

A holographic polymer dispersed liquid crystal (HPDLC) may be used as a hologram medium that forms the first and second hologram elements 163a and 163b constituting the hologram optical unit 163 described above. A polymer dispersed liquid crystal (PDLC) may be a material formed by dispersing a polymer in a liquid crystal cell, and may have a characteristic of being controlled into a transparent state and a diffusion state according to electrical control. In particular, it is known that when a hologram is recorded on an HPDLC formed by dispersing a photopolymer within a liquid crystal cell, the hologram image may be electrically switched.

The display panel 164 may modulate the light reproduced as described above by the hologram optical unit 163 according to an image signal to form an image, and may be, for example, configured as a liquid crystal panel. Since the first and second hologram elements 163a and 163b are arranged on a rear side of the display panel 164, the display panel 164 may modulate the lights reproduced by the first and second hologram elements 163a and 163b according to the image signal. The display panel 164 may divide an image of one frame into a plurality of images to alternately implement the images in a time-division scheme (time multiplexing). For example, an image of one frame may be divided into two sub-frame images, and the display panel 164 may modulate the lights according to the image signals corresponding to the two sub-frame images, respectively. The two sub-frame images may be a background image I1 and a front image I2. A cycle in which the display panel 164 alternately implements the background image I1 and the front image I2 has to be shorter than blinking of an eye of the user so as to be recognized as the image of one frame, and the cycle may be, for example, shorter than 1/120 seconds. As shown in the drawings, the background image I1 may form a sense of depth for the user as much as d corresponding to a difference between d2 and d1 with respect to the front image I2, so that an image with a three-dimensional effect may be perceived by the user.

The light path change unit 162 may be disposed in the light path between the lighting unit 161 and the hologram optical unit 163, so that the lights from the first and second light source units 161a and 161b may be incident on the hologram optical unit 163 at different angles. For example, the light path change unit 162 may change the light path so that the lights from the first and second light source units 161a and 161b may have the angle of the reference light used upon the recording of the hologram on the first and second hologram elements 163a and 163b. To this end, the light path change unit 162 may be configured as a Fresnel lens that is arranged obliquely with respect to a fixing plate 161c on which the first and second light source units 161a and 161b are mounted. The Fresnel lens may serve to focus and collimate a light. In addition, as shown in the drawings, the Fresnel lens may be arranged obliquely with respect to the fixing plate 161c, so that the lights from the first and second light source units 161a and 161b may be incident on the Fresnel lens at different incident angles. Therefore, the lights from the first and second light source units 161a and 161b may have paths of passing through the Fresnel lens and being incident on the hologram optical unit 163 at different angles. A degree to which the Fresnel lens is tilted with respect to the fixing plate 161c may be appropriately determined by considering the angle of the reference light upon the recording of the hologram on the first and second hologram elements 163a and 163b. Although one Fresnel lens has been illustrated and described in the drawings as being used as the light path change unit 162, a plurality of path change members arranged on the light paths from the first and second light source units 161a and 161b may be employed, and a plurality of condensing lenses and the like other than the path change members may be further provided. In addition, rotation driving units 161d and 162a may be mounted on fixed ends of the fixing plate 161c and the light path change unit 162 so that inclinations of the fixing plate 161c and the light path change unit 162 may be adjusted to an optimal state. (See FIG. 12)

The control unit C may control driving of the lighting unit 161 and the display panel 164, and may control, for example, on/off states of the first and second light source units 161a and 161b in synchronization with the sequential modulation of the image signals corresponding to the two sub-frame images on the display panel 164. In addition, as described above, when the first and second hologram elements 163a and 163b are formed of the holographic polymer dispersed liquid crystal, each of the first and second hologram elements 163a and 163b may be controlled to be switched in synchronization with a lighting signal and the image signal.

As described above, the user may see two images I1 and I2 with a sense-of-depth difference of d according to the synchronized driving of the display panel 164 and the lighting unit 161 together with an action of forming the screen images in the hologram optical unit 163, thereby recognizing a three-dimensional image. In addition, it is also possible to implement a general two-dimensional image by using only one of the light source units 161a and 161b constituting the lighting unit 161 and modulating the light according to a two-dimensional image signal in the display panel 164.

In this case, according to the present embodiment, the multifunctional document-processing device may include a hologram output unit 160 having a specific structure, so that a hologram stereoscopic image including an emoticon and a character may be independently output on front, left, and right sides based on a face of the user so as to allow command information selected by a user, operation state information of the document scanning unit 111, and operation state information of the printed matter output unit 112 to be intuitively recognized, and as a result, a multifunctional document-processing device capable of maximizing convenience of use may be provided.

Only specific embodiments have been described above in the detailed description of the present invention. However, it should be understood that the present invention is not limited to the specific forms mentioned in the detailed description, but rather encompasses all modifications, equivalents, and substitutes within the idea and scope of the present invention defined by the appended claims.

In other words, the present invention is not limited to the specific embodiments and descriptions described above, various modifications can be implemented by a person having ordinary skill in the art to which the present invention pertains without departing from the gist of the present invention claimed in the claims, and such modifications are within the scope of the present invention.

## Claims

1. A multifunctional document-processing device comprising:
a body unit (110) including a document scanning unit (111) embedded in the body unit (110) and having a seating surface (111a) with a top surface on which a document to be scanned is seated, a document discharge port (112a) formed on one side surface of the body unit (110) to perform discharge from a printed matter output unit (112) mounted inside the body unit (110), and a screen output unit (120) mounted on one top side of the body unit (110) by a hinge structure (113) so as to be foldable on a top surface of the body unit (110);
the screen output unit (120) mounted on the one top side of the body unit (110) by the hinge structure (113), having a structure to which a morphic light field 3D technology capable of outputting a three-dimensional image or video by a control signal transmitted from a screen output control unit (150) is applied, having an electrostatic touch screen structure, and configured to sense a screen touch of a user so as to transmit a touch coordinate value to the screen output control unit (150);
a first motion sensing unit (131) mounted in a structure that continuously surrounds an edge (121) of the screen output unit (120), and protruding a predetermined height from a surface of the screen output unit (120) to recognize when a finger approaches a predetermined distance from the surface of the screen output unit (120) so as to detect a corresponding input coordinate value;
a RealSense camera unit (140) mounted on an upper portion of the edge of the screen output unit (120), and configured to detect position and direction information of the finger and a pupil of the user so as to transmit the detected position and direction information to the screen output control unit (150);
the screen output control unit (150) mounted inside the body unit (110), and configured to control an operation of the screen output unit (120) based on data acquired from the screen output unit (120), the first motion sensing unit (131), and a translation processing unit (152); and
the translation processing unit (152) mounted inside the body unit (110), and configured to recognize character information based on document information acquired through the document scanning unit (111) so as to translate the character information into a language selected by the user and transmit processed information to the screen output control unit (150).

2. The multifunctional document-processing device of claim 1, wherein the body unit further includes:
a manual input unit (114) mounted on the top surface of the body unit while being adjacent to the seating surface, and configured to receive command information by a finger touch or a pressing motion of the user; and
a wireless communication module (115) formed on the side surface of the body unit, and configured to wirelessly interwork with a smart device of the user so as to receive document information provided from the smart device of the user.

3. The multifunctional document-processing device of claim 1, wherein the screen output control unit (150) is configured to:
output the three-dimensional image or video such that a plurality of work windows obtained by dividing a screen are arranged on the screen output unit (120) by a finger touch of the user;
output the character information acquired from the document scanning unit (111), the translated character information, or a dictionary corresponding to the language selected by the user on the three-dimensional image or video; and
output a keyboard image for receiving a control value desired by the user from the user on the three-dimensional image.

4. The multifunctional document-processing device of claim 1, wherein the RealSense camera unit (140) includes:
a second motion sensing unit (132) mounted on the upper portion of the edge of the screen output unit (120), and configured to capture positions of an arm and a hand of the user in real time so as to detect position information of the arm and the hand; and
a third motion sensing unit (133) mounted on the upper portion of the edge of the screen output unit (120), and configured to capture the pupil of the user in real time so as to detect the direction information of the pupil.

5. The multifunctional document-processing device of claim 4, further comprising:
a coordinate correction unit (151) mounted inside the body unit (110), and configured to calculate a second coordinate result value by correcting a first coordinate result value based on data acquired through the second motion sensing unit (132) and the third motion sensing unit (133) and transmit the calculated second coordinate result value to the screen output control unit (150),
wherein the screen output control unit (150) is configured to calculate the first coordinate result value based on a touch sensing coordinate value acquired from the screen output unit (120) and the input coordinate value acquired from the first motion sensing unit (131), control the screen output unit (120) to output a three-dimensional image or video corresponding to the first coordinate result value based on the first coordinate result value, and control the operation of the screen output unit (120) based on data acquired from the coordinate correction unit (151).

6. The multifunctional document-processing device of claim 1, further comprising:
a hologram output unit (160) mounted on a top surface and a side surface of the edge of the screen output unit (120), and configured to output command information selected by the user, operation state information of the document scanning unit (111), and operation state information of the printed matter output unit (112) as a hologram stereoscopic image at a predetermined distance from the edge of the screen output unit (120).

7. The multifunctional document-processing device of claim 6, wherein the hologram output unit (160) includes:
an upper output unit (160a) mounted on the top surface of the edge (121) of the screen output unit (120), and configured to output a hologram stereoscopic image on a front side of a face of the user, in which the hologram stereoscopic image includes an emoticon and a character corresponding to the command information selected by the user;
a left output unit (160b) mounted on a left side surface of the edge of the screen output unit (120), and configured to output a hologram stereoscopic image on a left front side of the user, in which the hologram stereoscopic image includes an emoticon and a character corresponding to the operation state information of the document scanning unit (111); and
a right output unit (160c) mounted on a right side surface of the edge of the screen output unit (120), and configured to output a hologram stereoscopic image on a right front side of the user, in which the hologram stereoscopic image includes an emoticon and a character corresponding to the operation state information of the printed matter output unit (112).

8. The multifunctional document-processing device of claim 6, wherein the hologram output unit (160) includes:
a lighting unit (161) mounted inside the edge of the screen output unit (120), and including a plurality of light source units that are sequentially turned on/off;
a hologram optical unit (163) configured to reproduce a light that forms a plurality of screen images spaced apart from each other in a depth direction in a space when a light is incident from the lighting unit (161);
a display panel (164) configured to modulate the light reproduced by the hologram optical unit (163) according to an image signal, in which an image of one frame is divided into a plurality of images such that a number of the images is equal to a number of light source units, and sequentially modulate a plurality of sub-frame images to be formed at positions spaced apart from each other in the depth direction; and
a light path change unit (162) disposed in a light path between the lighting unit (161) and the hologram optical unit (163), configured to change the path such that lights emitted from the light source units are incident on the hologram optical unit (163) at different incident angles, and including a Fresnel lens.
